# EUROPEAN PATENT SPECIFICATION

(11) **EP 2 868 948 B1**
(45) Date of publication and mention of the grant of the patent: **18.12.2019**
(21) Application number: 13190631.5
(22) Date of filing: 29.10.2013
(51) Int. Cl.: F16H 59/02, F16H 59/10

(54) **Method for shifting gears and gear shifting arrangement**
Verfahren zum Schalten von Gängen und Schaltanordnung
Procédé pour changer les vitesses et arrangement de changement de vitesse

(43) Date of publication of application: 06.05.2015
(73) Proprietor: Volvo Car Corporation, 40531 Göteborg (SE)
(72) Inventor: Malm, Per-Arne, 426 68 Västra Frölunda (SE); Stojanovski, Toni, 41765 Göteborg (SE); Hallén, Lars, 427 39 Billdal (SE); Holtenius, Cecilia, 426 79 Västra Frölunda (SE)
(74) Representative: Kransell & Wennborg KB

(56) References cited:
- EP-A2- 1 338 831
- EP-A2- 1 801 463
- DE-A1- 19 849 076
- US-B1- 6 360 624
- BMW AG: "Betriebsanleitung X3 xDrive28i", 30 December 2011 (2011-12-30), München, Deutschland, XP007922584, pages 64-65, * the whole document *

## Description

### TECHNICAL FIELD

The present invention relates to the field of gear shifting arrangements and methods of shifting gears in electronic automatic transmission shifters provided in vehicles. In particular it relates to gear shifting arrangements comprising a monostable shift lever.

### BACKGROUND ART

Shifting devices for an automatic transmission shifter of a motor vehicle with a shift lever which can be moved in a shift track in order to select different operable gear modes such as drive, manual, neutral, reverse and park are commonly known. In such arrangements the shift lever positions for each gear mode are often arranged consecutively on a single axis in the shift track. Selecting the intended gear thus requires precision when moving the shift lever along the track and there is a significant risk of ending up with the shift lever in the wrong position, i.e. selecting the wrong gear.

It is also commonly known to use monostable shift levers for selecting gear modes.

In automatic transmissions it is of great importance that the right operable gear mode is selected. For example, US federal regulations requires two separate actions to enable shifting from park mode to a driving mode in automatic transmission shifters in order to prevent accidental engagement of a driving position instead. The first action of the requirement is most often fulfilled by enforcing the engagement of the vehicle brake. The most common way to meet the requirement of a second action is by providing the shift lever with a locking mechanism, e.g. a mechanical release button arranged upon the gear-shift lever which is easily accessible and releases the locking mechanism upon being pushed. In such setups moving the shift lever out of the parking position requires both disengagement of the locking mechanism by the release button and engagement of the vehicle brake. The document "BMW AG: Betriebsanleitung X3 xDrive28i" discloses a method wherein disengagement of the locking mechanism by a release button must be performed in order to shift to drive or reverse mode from park mode.

Other ways of avoiding accidental gear shifting is to arrange the shift lever position of the park mode such that the shift lever must be mechanically shifted from park mode to another position in the shift track before being able to select reverse or drive mode.

The problems associated with the solutions according to the prior art is that shifting arrangements require mechanical or electronic locking mechanisms in the shift lever which gives rise to an increased complexity, design constraints and increased cost.

In addition, the complexity of some gear shifting arrangements causes an increased risk of unintentionally selecting the wrong gear. The document US6360624 B1 discloses a method with the features of the preamble of claim 1 and in which the drive mode and reverse mode is engaged by overpressing the shift lever in a first and second direction respectively. It also disclose a method in which reverse mode is engaged, from park mode, by tipping the shift lever in a first direction and drive mode is engaged, from park mode, by overpressing the shift lever in the first directions.

### DESCRIPTION

The object of the present invention is to provide an inventive method for shifting gears in which the steps of selecting gear modes are simplified and in which accidental shifting or shifting into an unintended gear mode is avoided. It is a further object of the invention to provide a gear shifting arrangement for an electronic automatic transmission shifter where the previously mentioned problems are at least partly avoided. These objects are achieved by the features defined in the independent claims.

Further advantages are achieved by implementing one or several of the features of the dependent claims.

The invention relates to a method for shifting gears in a gear shifting arrangement provided in an electronic automatic transmission shifter provided in a vehicle, wherein the gear shifting arrangement comprises at least a neutral mode, a drive mode, a reverse mode and a park mode and a shift lever which is monostable along a first axis in a first position, the shift lever being movable along the first axis in a first direction and a second direction. The method comprises selecting the reverse mode by displacing the shift lever in the first direction two consecutive times from park mode, allowing the shift lever to return to the first position in between and selecting the drive mode by displacing the shift lever in the second direction two consecutive times from park mode, allowing the shift lever to return to the first position in between. The monostable property of the shift lever allows it to return to the first position in between each displacement in the first or second direction without the user needing to actively pull or push it back thereby facilitating a simple and effective action to switch gear mode. The shift lever has a first end position and a second end position which is reached upon displacement in the first direction and the second direction respectively before returning to the first position, thereby eliminating the need for a user to control the degree of the displacement and find the correct position. By allowing the shift lever to easily reach its first or second end position at each displacement, the accuracy of the shifting is improved.

Selecting a driving mode, i.e. reverse mode or drive mode by moving the shift lever twice in the same direction is ergonomically better than moving the shift lever in other pattern e.g. including displacement in several directions. The monostable shift lever also requires less applied force during the movement as it swings back automatically. The method thus has great advantages over other methods in which the gear shifting pattern are of greater complexity.

By using two consecutive displacements it is unlikely that the action of shifting gear is performed unintentionally e.g. by accidentally hitting and moving the shift lever once. The consecutive double displacement of the shift lever from the first position is thus to be considered as a distinct action that, in combination with another action, may fulfil the safety requirements enforced upon gear switching between for example park mode and drive mode. A benefit of the invention is that the consecutive displacement of the shift lever from the first position along the first axis, in combination with a second separate action, disengages a shift lock in park mode and thereby allows setting the gear shifting arrangement in a driving mode, i.e. drive or reverse mode.

The two driving modes are arranged to be selected by movement of the shift lever in two opposing directions along the first axis. The gear shifting pattern thereby eliminates risk of selecting the wrong driving gear.

Upon starting the vehicle the gear shifting arrangement is in park mode or neutral mode, preferably in park mode. Shift lock is preferably engaged upon starting the vehicle. The reverse mode is preferably reached by displacing the shift lever in the first direction two consecutive times from park mode. The drive mode is preferably reached by displacing the shift lever in the second direction two consecutive times from park mode. Selecting drive mode directly from reverse mode and selecting reverse mode directly from drive or neutral mode may be possible when certain conditions are fulfilled.

The shift lever may be bistable along a second axis and monostable along a third axis, the shift lever being movable along the third axis in the first direction and the second direction, wherein the second axis is essentially perpendicular to the first axis and the third axis is parallel to the first axis. The method may further comprise selecting manual mode by moving the shift lever to a second position along the second axis from drive mode and controlling a manual gear selection by moving the shift lever along the third axis in a first direction and a second direction. The shift lever is monostable in the second position along the third axis. Selecting manual mode by moving the shift lever to the second position is only allowed from the drive mode. The action of selecting a manual mode, i.e. arranging the shift lever in the second position from drive mode, is essentially a perpendicular shift lever movement in relation to shift lever movements performed when selecting any of the other gear modes. The shifting pattern of selecting the manual gear mode is thus distinguishable from the other gear shifting patterns of the shift arrangement and thus eliminates any user uncertainty and lowers the risk of unintentional shifting to manual mode when attempting to shift to another gear mode.

The method may further comprise selecting the park mode by displacing the shift lever along the first axis in the first direction one time from reverse mode, two consecutive times from neutral mode and three consecutive times from drive mode, allowing the shift lever to return to the first position in between each displacement.

Alternatively, selecting park mode may be performed by a shift pattern action other than the one described above or by another separate action. For example, the gear shifting arrangement may include a push button arranged separate from the shift lever wherein pushing the button selects and activates the park mode. A skilled person would realize that other options are available.

The method may further comprise selecting the neutral mode by displacing the shift lever once in the first or second direction from park mode. Neutral mode is also selectable when in one of the driving modes; by displacing the shift lever once in the first direction from drive mode or by displacing the shift lever once in the second direction from reverse mode.

Correspondingly, the method may further comprise selecting the reverse mode by displacing the shift lever once in the first direction from neutral mode and/or selecting the drive mode by displacing the shift lever once in the second direction from neutral mode.

In some setups and under some conditions the method may also allow reverse mode to be selected by displacing the shift lever twice in the first direction from neutral mode when shift lock is engaged and drive mode to be selected by displacing the shift lever twice in the second direction from neutral mode when shift lock is engaged.

The method may also comprise engaging a brake of the vehicle when selecting the reverse or the drive mode from the park or the neutral mode when shift lock is engaged. Shift lock is always engaged in park mode, and is engaged in neutral mode when neutral mode has been set for a predetermined period of time. In order select a driving mode from a non-driving mode in which shift lock is engaged, force must be applied on the brake in order to disengage shift lock. This further has the effect that unintentional reverse or forward movement of the vehicle is avoided. The condition to apply the brake is a safety measure and is considered as a separate action in regards to the safety requirements enforced upon enabling shifting from park mode or neutral mode when shift lock is engaged to a driving mode.

As disclosed above the method may include two separate actions for enabling driving mode from park mode, i.e. upon starting the vehicle; displacing the shift lever two consecutive times in a first or second direction and applying the brake. Other separate actions such as releasing a locking mechanism on the shift lever may thus be avoided.

The invention further relates to a gear shifting arrangement for an electronic automatic transmission shifter provided in a vehicle, comprising a shift lever, wherein the shift lever is monostable along a first axis in a first position and movable along the first axis in a first direction and a second direction and wherein the gear shifting arrangement further comprises at least a neutral mode, a drive mode, a reverse mode and a park mode. The reverse mode is selected by displacing the shift lever in the first direction two consecutive times from park or drive mode upon which the shift lever is allowed to return to the first position in between; and the drive mode is selected by displacing the shift lever in the second direction two consecutive times from park, or reverse mode upon which the shift lever is allowed to return to the first position in between each consecutive displacement.

The gear shifting arrangement as described above provides one separate action for selecting drive mode or reverse mode from park mode. In combination with another separate action, such as the engagement of the brake, the gear shifting arrangement fulfils the requirements of providing two separate actions to shift from park mode. A release button is thus superfluous and the freedom of design of the shift lever of the present gear shifting arrangement is thus increased. The shift lever may for example be manufactured in a larger variety of materials.

Such a gear shift arrangement can also be made compact as it only requires a first end position and a second end position and a first position arranged intermediate the first and second end position along a first axis along which the shift lever is monostable.

The shift lever may be bistable along a second axis and movable to a second position along the second axis wherein moving the shift lever to a second position along said second axis from drive mode selects manual mode. The second axis is essentially perpendicular to the first axis, preferably arranged at 80-100 degrees relative the first axis thus avoiding any movements to the second position by mistake.

The shift lever is preferably monostable along a third axis in the second position and movable along the third axis in the first direction and the second direction, wherein the third axis is parallel to the first axis. Manual mode may be selected by moving the shift lever to the second position.

Movement of the gear shift along the third axis in a first direction or a second direction in second position may control the manual gear selection. The manual gear selection may also be controlled by other means, such as paddles arranged on the steering wheel.

Alternatively the manual mode may be selected by activation of a push button arranged separate from the shift lever. In such a setup movement of the gear shift along the first axis in a first direction or in a second direction in first position controls the manual gear selection. Preferably, a single displacement corresponds to a single gear shift and several consecutive displacements correspond to consecutive gear shifts. This embodiment allows for a compact gear shifting arrangement.

The park mode may be selected by displacing the shift lever along the first axis in the first direction one time from reverse mode, two consecutive times from neutral mode and three consecutive times from drive mode, upon which the shift lever is allowed to return to the first position in between each displacement. In such a setup i.e. where park mode is selected by displacing the shift lever along the first axis, the reverse mode may not be selected by two consecutive displacements in a first direction along the first axis from neutral mode unless shift lock is activated. The park mode may alternatively be selected by activation of a separately arranged push button. Both options, and other possible options, for activating park mode may be available in the same vehicle.

Neutral mode may be selected by displacing the shift lever once in the first or second direction from park mode.

In addition to displacing the shift lever two consecutive times in the first direction from park mode the reverse mode may also be selected by displacing the shift lever once in the first direction from neutral mode if shift lock mode is not engaged. The same applies to the drive mode, which may also be selected by displacing the shift lever once in the second direction from neutral mode if shift lock mode is not engaged.

The gear shifting arrangement may comprise a shift lock mechanism. The shift lock may be engaged in neutral mode if neutral mode has been set for a predetermined period of time. Drive mode may be selected by displacing the shift lever in a second direction along the first axis two consecutive times from neutral mode in which shift lock is engaged and reverse mode may be selected by displacing the shift lever in a first direction along the first axis two consecutive times from neutral mode in which shift lock is engaged only upon simultaneous engagement of the vehicle brake. That is, shift lock may be disengaged in neutral mode by performing a consecutive shift lever movement along the first axis in combination with the engagement of the brake, thereby allowing gear selection to be performed.

### BRIEF DESCRIPTION OF THE DRAWINGS

The present invention will now be described in detail with reference to the figures, wherein:
- Figure 1: shows a schematic pattern of a gear shifting arrangement according to the invention;
- Figure 2: shows a schematic view of a visual chart of the gear shifting arrangement according to the arrangement; and
- Figure 3: shows a schematic pattern of a gear shifting arrangement according to the invention.

### DETAILED DESCRIPTION OF THE DRAWINGS

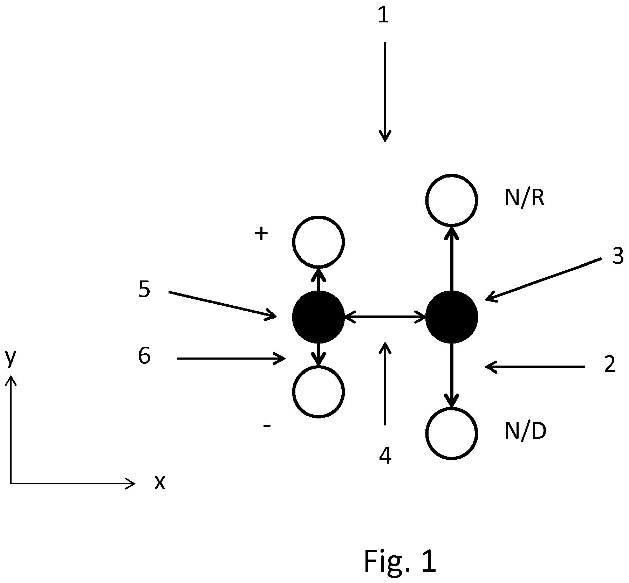

The inventive gear shifting arrangement 1 is now described in conjunction with Figures 1-3. Figure 1 shows a schematic pattern of gear shifting arrangement 1 according to the invention. The shift lever is arranged to be positioned in a first position 3 upon starting the vehicle in park mode. Shift lock is engaged in park mode, and the brake needs to be applied in order to allow gear mode selection from park mode. The shift lever is monostable along a first axis 2 in the first position 3 i.e. can be displaced or tilted in either direction along the first axis by applying a pushing or pulling force upon it. Two consecutive displacements of the shift lever in a first direction along a first axis 2, from the first position to a first end position (marked N/R) selects the reverse mode from park mode. The shift lever automatically returns to the first position 3, being a monostable position, in between each of the two displacements upon releasing the shift lever. Correspondingly the drive mode is selected from park mode, upon starting the vehicle in park mode, by two consecutive displacements of the shift lever in second direction along the first axis 2 from the first position 3 to a second end position (marked N/D). The shift lever is allowed to return to the first position in between the two displacements upon releasing the shift lever.

The neutral mode is selected from reverse mode by displacing the shift lever from the first position 3 once in the second direction along the first axis 2 to the second end position or, if certain conditions are fulfilled, the drive mode is selected from reverse mode by displacing the shift lever twice in the second direction along the first axis 2. During each displacement the shift lever is moved to the second end position (N/D) and returned to the first position 3.

From drive mode, the neutral mode is selected by displacing the shift lever once from the first position 3 in the first direction along the first axis 2 to the first end position or, if certain conditions are fulfilled, the reverse mode is selected by displacing the shift lever twice in the first direction along the first axis 2.

The neutral mode is selected from reverse mode by displacing the shift lever from the first position 3 once in a second direction along the first axis 2 to the second end position. Neutral mode is selected from drive mode by displacing the shift lever from the first position 3 once in a first direction along the first axis 2 to the first end position. The shift lever, being monostable in the first position, will automatically return to the first position 3.

In Figure 1 a manual mode is selected by moving the shift lever sideways, from the first position 3 to a second position 5 arranged along a second axis 4. The second axis 4 is arranged perpendicular to the first axis 2 making the selection of manual mode a distinct movement different from movement associated with selecting neutral, reverse or drive mode. A movement from the first position 3 to the second position 5, results in manual mode only when drive mode is selected on the first axis 3. The shift lever is bistable along the second axis 4, and thus stays in second position 5 once moved sideways into the second position 5 on the second axis 4. Manual gear selection is controlled by displacing the shift lever in a first or second direction along a third axis 6. The shift lever is monostable along a third axis 6, and movable to a third end position in the first direction and to a forth end position along in the second direction. The third axis 6 is parallel to the first axis 2.

The shifting pattern, i.e. the pattern of movement of the shift lever in order to shift gears, in the gear shifting arrangement 1 is straight forward and easy to comprehend even at the first use. There is no risk of selecting the wrong driving gear, e.g. reverse instead of drive mode, by mistake since the drive mode and reverse mode are reached by moving the shift lever in two opposite directions along the first axis.

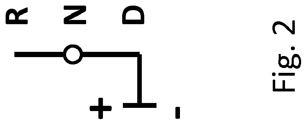

Figure 2 shows a visual chart indicating the gear shifting pattern. The visual chart is intended to be arranged in the vehicle such that it is visible to the driver and can thereby be used by the driver as a gear shifting guide. As seen from Figure 2 the reverse mode is selected by displacing the shift lever in a first direction from neutral mode and the drive mode is selected by displacing the shift lever in a second direction from neutral mode. Manual mode is indicated by +/- and is only selectable from drive mode.

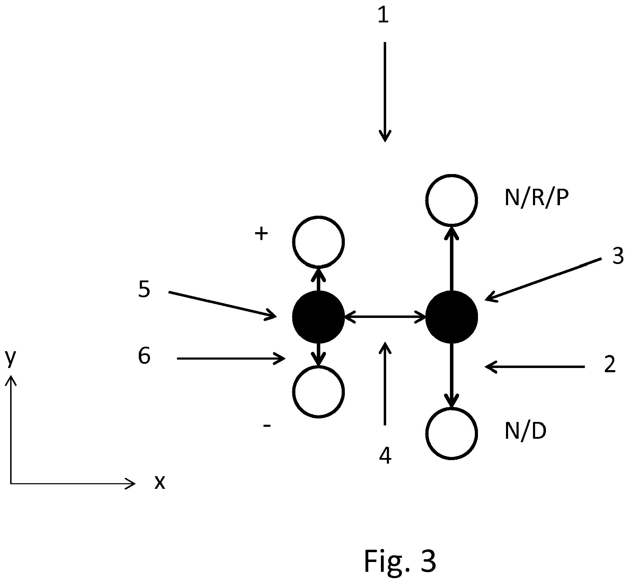

Figure 3 shows a schematic pattern of a gear shifting arrangement according to the invention. In Figure 3, a park mode is selected from reverse mode by a displacement of the shift lever once from the first position 3 in the first direction to the first end position along the first axis 2. The park mode is selected from neutral mode by two consecutive displacements from the first position 3 in the first direction along the first axis 2. The park mode is selected from drive mode by three consecutive displacements from the first position 3 in the first direction along the first axis 2. The shift lever is monostable in the first position and thus returns to the first position in between each displacement. The other gear modes are selected in the same way as described in conjunction with Figure 1, i.e. the shifting pattern is the same as in Figure 1.

The invention is not limited to the specific embodiments presented, but includes all variations within the scope of the present claims.

Reference signs mentioned in the claims should not be seen as limiting the extent of the matter protected by the claims, and their sole function is to make claims easier to understand.

As will be realised, the invention is capable of modification in various obvious respects, all without departing from the scope of the appended claims. Accordingly, the drawings and the description thereto are to be regarded as illustrative in nature, and not restrictive.

## Claims

1. Method for shifting gears in a gear shifting arrangement (1) provided in an electronic automatic transmission shifter provided in a vehicle, wherein the gear shifting arrangement (1) comprises at least a neutral mode, a drive mode, a reverse mode and park mode and a shift lever which is monostable along a first axis (2) in a first position (3), said shift lever being movable along said first axis (2) in a first direction and a second direction,
**characterized in that** the method comprises:
- selecting the reverse mode by displacing the shift lever to a first end position in said first direction two consecutive times from park mode, allowing said shift lever to return to said first position (3) in between each said displacement;
- selecting the drive mode by displacing the shift lever to a second end position in the second direction two consecutive times from park mode, allowing said shift lever is to return to said first position (3) in between each said displacement.

2. Method for shifting gears according to claim 1, wherein said shift lever is bistable along a second axis (4) and monostable along a third axis (6) and wherein said shift lever is movable along said third axis (6) in said first direction and said second direction, wherein the third axis (6) is parallel to the first axis (2), wherein the method further comprises:
- selecting manual mode by moving the shift lever to a second position (5) along said second axis (4); and
- moving said shift lever along said third axis (6) in a first direction and a second direction in said second position, thereby controlling a manual gear selection.

3. Method for shifting gears according to claims 1 or 2, wherein the method further comprises:
- selecting said park mode by displacing the shift lever along the first axis (2) in said first direction one time from reverse mode, two consecutive times from neutral mode and three consecutive times from drive mode, allowing said shift lever to return to said first position (3) in between.

4. Method for shifting gears according to any of the above claims, wherein the method further comprises:
- selecting said neutral mode by displacing the shift lever once in said first or second direction from park mode.

5. Method for shifting gears according to any of the above claims, wherein the method further comprises:
- selecting said reverse mode by displacing the shift lever once in said first direction from neutral mode;
- selecting said drive mode by displacing the shift lever once in said second direction from neutral mode.

6. Method for shifting gears according to any of the above claims, wherein the method further comprises:
- engaging a brake of said vehicle when selecting said reverse or drive mode from said park or neutral mode when shift lock is engaged.

7. Gear shifting arrangement (1) for an electronic automatic transmission shifter provided in a vehicle, comprising a shift lever, wherein the shift lever is monostable along a first axis (2) in a first position (3) and movable along said first axis (2) in a first direction and a second direction and wherein the gear shifting arrangement (1) further comprises at least a neutral mode, a drive mode and a reverse mode,
**characterized in that**
- the reverse mode is selected by displacing the shift lever to a first end position in said first direction two consecutive times from park mode upon which the shift lever is allowed to return to said first position (3) in between said two consecutive displacements times; and
- the drive mode is selected by displacing the shift lever to a second end position in the second direction two consecutive times from park mode upon which the shift lever is allowed to return to said first position (3) in between said two consecutive displacements times.

8. Gear shifting arrangement (1) according to claim 7, wherein said shift lever is bistable along a second axis (4) and movable to a second position (5) along said second axis (4) wherein moving the shift lever to a second position (5) along said second axis (4) from drive mode selects manual mode.

9. Gear shifting arrangement (1) according to claim 8, wherein said shift lever is monostable along a third axis (6) in said second position (5) and movable along said third axis (6) in said first direction and said second direction, wherein the third axis (6) is parallel to the first axis.

10. Gear shifting arrangement (1) according to claims 7 or 8, wherein movement of said gear shift along said third axis (6) in a first direction or a second direction in second position (5) controls a manual gear selection.

11. Gear shifting arrangement (1) according to any of the claims 7-10, wherein said park mode is selected by displacing the shift lever along the first axis (2) in said first direction one time from reverse mode, two consecutive times from neutral mode and three consecutive times from drive mode, upon which the shift lever is allowed to return to said first position (3) in between.

12. Gear shifting arrangement (1) according to any of the claims 7-11, wherein the neutral mode is selected by displacing the shift lever once in said first or second direction from park mode.

13. Gear shifting arrangement (1) according to any of the claims 7-12, wherein the reverse mode is also selected by displacing the shift lever once in said first direction from neutral mode.

14. Gear shifting arrangement (1) according to any of the claims 7-13, wherein the drive mode is also selected by displacing the shift lever once in said second direction from neutral mode.

## Patentansprüche

1. Verfahren zum Schalten von Gängen in einer Schaltanordnung (1), die in einer in einem Fahrzeug vorgesehenen elektronischen Automatikgetriebeschaltung vorgesehen ist, wobei die Schaltanordnung (1) mindestens einen Neutralmodus, einen Fahrmodus, einen Rückwärtsmodus und einen Parkmodus und einen Schalthebel, der entlang einer ersten Achse (2) in einer ersten Position (3) monostabil ist, umfasst, wobei der Schalthebel entlang der ersten Achse (2) in eine erste Richtung und eine zweite Richtung beweglich ist,
**dadurch gekennzeichnet, dass** das Verfahren Folgendes umfasst:
- Auswählen des Rückwärtsmodus durch zweimaliges aufeinanderfolgendes Verschieben des Schalthebels vom Parkmodus in eine erste Endposition in die erste Richtung, wobei es dem Schalthebel ermöglicht wird, zwischen jeder einzelnen Verschiebung in die erste Position (3) zurückzukehren;
- Auswählen des Fahrmodus durch zweimaliges aufeinanderfolgendes Verschieben des Schalthebels vom Parkmodus in eine zweite Endposition in die zweite Richtung, wobei es dem Schalthebel ermöglicht wird, zwischen jeder einzelnen Verschiebung in die erste Position (3) zurückzukehren.

2. Verfahren zum Schalten von Gängen nach Anspruch 1, wobei der Schalthebel entlang einer zweiten Achse (4) bistabil ist und entlang einer dritten Achse (6) monostabil ist und wobei der Schalthebel entlang der dritten Achse (6) in die erste Richtung und die zweite Richtung beweglich ist, wobei die dritte Achse (6) parallel zur ersten Achse (2) ist, wobei das Verfahren ferner Folgendes umfasst:
- Auswählen des manuellen Modus durch Bewegen des Schalthebels entlang der zweiten Achse (4) in eine zweite Position (5); und
- Bewegen des Schalthebels entlang der dritten Achse (6) in eine erste Richtung und eine zweite Richtung in die zweite Position, wodurch eine manuelle Gangauswahl gesteuert wird.

3. Verfahren zum Schalten von Gängen nach Anspruch 1 oder 2, wobei das Verfahren ferner Folgendes umfasst:
- Auswählen des Parkmodus durch einmaliges Verschieben des Schalthebels vom Rückwärtsmodus, zweimaliges aufeinanderfolgendes Verschieben vom Neutralmodus und dreimaliges aufeinanderfolgendes Verschieben vom Fahrmodus entlang der ersten Achse (2) in die erste Richtung, wobei es dem Schalthebel ermöglicht wird, dazwischen in die erste Position (3) zurückzukehren.

4. Verfahren zum Schalten von Gängen nach einem der vorstehenden Ansprüche, wobei das Verfahren ferner Folgendes umfasst:
- Auswählen des Neutralmodus durch einmaliges Verschieben des Schalthebels vom Parkmodus in die erste oder zweite Richtung.

5. Verfahren zum Schalten von Gängen nach einem der vorstehenden Ansprüche, wobei das Verfahren ferner Folgendes umfasst:
- Auswählen des Rückwärtsmodus durch einmaliges Verschieben des Schalthebels vom Neutralmodus in die erste Richtung;
- Auswählen des Fahrmodus durch einmaliges Verschieben des Schalthebels vom Neutralmodus in die zweite Richtung.

6. Verfahren zum Schalten von Gängen nach einem der vorstehenden Ansprüche, wobei das Verfahren ferner Folgendes umfasst:
- Anziehen der Bremse des Fahrzeugs beim Auswählen des Rückwärts- oder Fahrmodus vom Park- oder Neutralmodus, wenn die Schalthebelsperre aktiviert ist.

7. Schaltanordnung (1) für eine in einem Fahrzeug vorgesehene elektronische Automatikgetriebeschaltung, einen Schalthebel umfassend, wobei der Schalthebel entlang einer ersten Achse (2) in einer ersten Position (3) monostabil ist und entlang der ersten Achse (2) in eine erste Richtung und eine zweite Richtung beweglich ist und wobei die Schaltanordnung (1) ferner mindestens einen Neutralmodus, einen Fahrmodus und einen Rückwärtsmodus umfasst, **dadurch gekennzeichnet, dass**
- der Rückwärtsmodus durch zweimaliges aufeinanderfolgendes Verschieben des Schalthebels vom Parkmodus in eine erste Endposition in die erste Richtung ausgewählt wird, wobei es dem Schalthebel ermöglicht wird, zwischen den zwei aufeinanderfolgenden Verschiebungen in die erste Position (3) zurückzukehren;
- der Fahrmodus durch zweimaliges aufeinanderfolgendes Verschieben des Schalthebels vom Parkmodus in eine zweite Endposition in die zweite Richtung ausgewählt wird, wobei es dem Schalthebel ermöglicht wird, zwischen den zwei aufeinanderfolgenden Verschiebungen in die erste Position (3) zurückzukehren.

8. Schaltanordnung (1) nach Anspruch 7, wobei der Schalthebel entlang einer zweiten Achse (4) bistabil ist und entlang der zweiten Achse (4) in eine zweite Position (5) beweglich ist, wobei das Bewegen des Schalthebels aus dem Fahrmodus entlang der zweiten Achse (4) in eine zweite Position (5) den manuellen Modus auswählt.

9. Schaltanordnung (1) nach Anspruch 8, wobei der Schalthebel entlang einer dritten Achse (6) in der zweiten Position (5) monostabil ist und entlang der dritten Achse (6) in die erste Richtung und die zweite Richtung beweglich ist, wobei die dritte Achse (6) parallel zur ersten Achse ist.

10. Schaltanordnung (1) nach Anspruch 7 oder 8, wobei die Bewegung des Schalthebels entlang der dritten Achse (6) in eine erste Richtung oder eine zweite Richtung in der zweiten Position (5) eine manuelle Gangauswahl steuert.

11. Schaltanordnung (1) nach einem der Ansprüche 7-10, wobei der Parkmodus durch einmaliges Verschieben des Schalthebels vom Rückwärtsmodus entlang der ersten Achse (2) in die erste Richtung, durch zweimaliges aufeinanderfolgendes Verschieben vom Neutralmodus und dreimaliges aufeinanderfolgendes Verschieben vom Fahrmodus ausgewählt wird, wobei es dem Schalthebel ermöglicht wird, dazwischen in die erste Position (3) zurückzukehren.

12. Schaltanordnung (1) nach einem der Ansprüche 7-11, wobei der Neutralmodus durch einmaliges Verschieben des Schalthebels vom Parkmodus in die erste oder zweite Richtung ausgewählt wird.

13. Schaltanordnung (1) nach einem der Ansprüche 7-12, wobei der Rückwärtsmodus ebenfalls durch einmaliges Verschieben des Schalthebels vom Neutralmodus in die erste Richtung ausgewählt wird.

14. Schaltanordnung (1) nach einem der Ansprüche 7-13, wobei der Fahrmodus ebenfalls durch einmaliges Verschieben des Schalthebels vom Neutralmodus in die zweite Richtung ausgewählt wird.

## Revendications

1. Procédé pour changer les vitesses dans un arrangement de changement de vitesse (1) prévu dans un levier de transmission automatique électronique prévu dans un véhicule, l'arrangement de changement de vitesse (1) comprenant au moins un mode de point mort, un mode de conduite, un mode de marche arrière et un mode de stationnement et un levier de vitesse qui est monostable le long d'un premier axe (2) dans une première position (3), ledit levier de vitesse étant mobile le long dudit premier axe (2) dans une première direction et une seconde direction,
le procédé consistant à:
- sélectionner le mode de marche arrière en déplaçant le levier de vitesse vers une première position finale dans ladite première direction deux fois consécutives à partir du mode de stationnement, permettant audit levier de vitesse de revenir à ladite première position (3) entre chacun desdits déplacements;
- sélectionner le mode de conduite en déplaçant le levier de vitesse vers une seconde position finale dans la seconde direction deux fois consécutives à partir du mode de stationnement, permettant audit levier de vitesse de revenir à ladite première position (3) entre chacun desdits déplacements.

2. Procédé pour changer les vitesses selon la revendication 1, dans lequel ledit levier de vitesse est bistable le long d'un deuxième axe (4) et monostable le long d'un troisième axe (6) et dans lequel ledit levier de vitesse est mobile le long dudit troisième axe (6) dans ladite première direction et ladite seconde direction, le troisième axe (6) étant parallèle au premier axe (2), le procédé consistant en outre à:
- sélectionner le mode manuel en déplaçant le levier de vitesse vers une seconde position (5) le long dudit deuxième axe (4); et
- déplacer ledit levier de vitesse le long dudit troisième axe (6) dans une première direction et une seconde direction vers ladite seconde position, commandant ainsi une sélection manuelle de vitesse.

3. Procédé pour changer les vitesses selon la revendication 1 ou 2, le procédé consistant en outre à:
- sélectionner ledit mode de stationnement en déplaçant le levier de vitesse le long du premier axe (2) dans ladite première direction une fois à partir du mode de marche arrière, deux fois consécutives à partir du mode de point mort et trois fois consécutives à partir du mode de conduite, permettant audit levier de vitesse de revenir à ladite première position (3) entre ces déplacements.

4. Procédé pour changer les vitesses selon l'une quelconque des revendications précédentes, le procédé consistant en outre à:
- sélectionner ledit mode de point mort en déplaçant une fois le levier de vitesse dans ladite première ou seconde direction à partir du mode de stationnement.

5. Procédé pour changer les vitesses selon l'une quelconque des revendications précédentes, le procédé consistant en outre à:
- sélectionner ledit mode de marche arrière en déplaçant une fois le levier de vitesse dans ladite première direction à partir du mode de point mort;
- sélectionner ledit mode de conduite en déplaçant une fois le levier de vitesse dans ladite seconde direction à partir du mode de point mort.

6. Procédé pour changer les vitesses selon l'une quelconque des revendications précédentes, le procédé consistant en outre à:
- engager un frein dudit véhicule lors de la sélection dudit mode de marche arrière ou de conduite à partir dudit mode de stationnement ou dudit mode de point mort lorsque le verrouillage du changement de vitesse est activé.

7. Arrangement de changement de vitesse (1) pour un levier de transmission automatique électronique prévu dans un véhicule, comprenant un levier de vitesse, le levier de vitesse étant monostable le long d'un premier axe (2) dans une première position (3) et mobile le long dudit premier axe (2) dans une première direction et une seconde direction et l'arrangement de changement de vitesse (1) comprenant en outre au moins un mode de point mort, un mode de conduite et un mode de marche arrière,
**caractérisé en ce que**
- le mode de marche arrière est sélectionné en déplaçant le levier de vitesse vers une première position finale dans ladite première direction deux fois consécutives à partir du mode de stationnement sur lequel le levier de vitesse est autorisé à revenir à ladite première position (3) entre lesdites deux fois consécutives de déplacement; et
- le mode de conduite est sélectionné en déplaçant le levier de vitesse vers une seconde position finale dans la seconde direction deux fois consécutives à partir du mode de stationnement sur lequel le levier de vitesse est autorisé à revenir à ladite première position (3) entre lesdites deux fois consécutives de déplacement.

8. Arrangement de changement de vitesse (1) selon la revendication 7, dans lequel ledit levier de vitesse est bistable le long d'un deuxième axe (4) et mobile vers une seconde position (5) le long dudit deuxième axe (4), le déplacement du levier de vitesse vers une seconde position (5) le long dudit deuxième axe (4) à partir du mode de conduite sélectionnant un mode manuel.

9. Arrangement de changement de vitesse (1) selon la revendication 8, dans lequel ledit levier de vitesse est monostable le long d'un troisième axe (6) dans ladite seconde position (5) et mobile le long dudit troisième axe (6) dans ladite première direction et ladite seconde direction, le troisième axe (6) étant parallèle au premier axe.

10. Arrangement de changement de vitesse (1) selon la revendication 7 ou 8, dans lequel le déplacement dudit changement de vitesse le long dudit troisième axe (6) dans une première direction ou dans une seconde direction en seconde position (5) commande une sélection manuelle de vitesse.

11. Arrangement de changement de vitesse (1) selon l'une quelconque des revendications 7 à 10, dans lequel ledit mode de stationnement est sélectionné en déplaçant le levier de vitesse le long du premier axe (2) dans ladite première direction une fois à partir du mode marche arrière, deux fois consécutives à partir du mode de point mort et trois fois consécutives à partir du mode de conduite, après quoi le levier de vitesse peut revenir à ladite première position (3) entre ces déplacements.

12. Arrangement de changement de vitesse (1) selon l'une quelconque des revendications 7 à 11, dans lequel le mode de point mort est sélectionné en déplaçant le levier de vitesse une fois dans ladite première ou seconde direction à partir du mode de stationnement.

13. Arrangement de changement de vitesse (1) selon l'une quelconque des revendications 7 à 12, dans lequel le mode de marche arrière est également sélectionné en déplaçant le levier de vitesse une fois dans ladite première direction à partir du mode de point mort.

14. Arrangement de changement de vitesse (1) selon l'une quelconque des revendications 7 à 13, dans lequel le mode de conduite est également sélectionné en déplaçant le levier de vitesse une fois dans ladite seconde direction à partir du mode de point mort.
